# NEUE EUROPÄISCHE PATENTSCHRIFT

(11) **EP 2 639 373 B2**
(45) Veröffentlichungstag und Bekanntmachung des Hinweises auf die Entscheidung über den Einspruch: **28.12.2022**
(45) Hinweis auf die Patenterteilung: 27.07.2016
(21) Anmeldenummer: 13000232.2
(22) Anmeldetag: 17.01.2013
(51) Int. Cl.: E04B 1/76, E05D 5/02, F16B 13/12

(54) **Thermo-Mauer-Anker**
Thermally insulated wall anchor
Ancrage isolé thermiquement pour mur

(30) Priorität: 16.03.2012 DE 102012005202
(43) Veröffentlichungstag der Anmeldung: 18.09.2013
(73) Patentinhaber: Hupfauf, Peter, 72513 Hettingen (DE)
(72) Erfinder: Hupfauf, Alexander, 72513 Hettingen (DE)
(74) Vertreter: Otten, Roth, Dobler & Partner mbB Patentanwälte

(56) Entgegenhaltungen:
- DE-A1- 19 947 913
- DE-A1-102011 012 643
- DE-B4-102006 052 648
- DE-U1-202007 009 225
- DE-U1-202008 000 031
- DE-U1-202010 009 614

## Beschreibung

Die Erfindung betrifft einen Befestigungsanker für ein Halteelement, für Fensterläden, welcher zur Befestigung in einer Wandung mit Dämmschicht und Mauerwerk, vorzugsweise in einer Wandung mit außen liegender Dämmschicht vorgesehen ist.

Die Technologie der Bau- und Sanierungsanwendungen weist stetig ansteigende Anforderungen an die Eigenschaften zur thermischen Trennung der verwendeten Bauelemente auf. Hohe Energiekosten sowie restriktive Energieeinsparungsverordnungen führen dazu, dass Gebäude immer stärker mit wärmedämmenden Außenschichten versehen werden, oder Baumaterialien mit extremen wärmedämmenden Eigenschaften ausgestattet sind. Gute Eigenschaften in der Wärmedämmung gehen jedoch oftmals zu Lasten der mechanischen Stabilität, was insbesondere zu Problemen bei der Befestigung von Gegenständen beispielsweise an Hausfassaden mit einer Wandung mit außen liegender Dämmschicht (z.B. Styropor) führt. Zur Befestigung von Gegenständen, beispielsweise von Fensterläden, Beleuchtungen, Wasserläufen oder Dachvorsprüngen ist es daher notwendig, einen Befestigungsanker durch die Dämmschicht hindurchzuführen und im Mauerwerk der Wandung, welches üblicherweise eine höhere mechanische Stabilität aufweist, zu verankern. Problematisch ist dabei jedoch, dass durch die durch eine Dämmschicht hindurchragenden Befestigungsanker wärmeleitende Wärmebrücken entstehen, welche einerseits zu erheblichem Wärmeverlust führen, andererseits aber auch den Taupunkt in einen hierfür nicht vorgesehenen Bereich verlagern können. Insbesondere bei Verlagerung des Taupunkts in einen Bereich des Mauerwerks erfolgt eine ungewünschte Kondensation von Tau-Feuchtigkeit im Mauerwerk, wodurch das Mauerwerk gegebenenfalls nachhaltig geschädigt werden kann.

Aus dem Stand der Technik sind Befestigungsanker bekannt, welche zur Bereitstellung der mechanischen Stabilität Metallabschnitte im Mauerwerk und in der Dämmschicht aufweisen, welche durch das Zwischenschalten eines Dämmelements thermisch voneinander getrennt sind. Auf diese Weise wird eine Wärmebrücke zwischen Außenseite der Wandung und dem Mauerwerk vermieden. Ein entsprechender Befestigungsanker ist beispielsweise aus der EP 2 400 092 A1 oder aus der DE 10 2007 016 236 B3 bekannt. Auch Kunststoffvarianten in der Dämmschicht sind aus der DE 199 47 913 A1 bekannt, welches Dokument die Merkmale des Oberbegriffs des Anspruchs 1 offenbart.

Nachteilig an den bekannten Befestigungsankern ist, dass durch die, die mechanische Stabilität erzeugenden Metallbestandteile, welche üblicherweise eine hohe Wärmeleitfähigkeit aufweisen, eine Wärme- bzw. Kältebrücke stets bis in den Grenzbereich des Übergangs der Dämmschicht zum Mauerwerk geführt wird, und auf diese Weise beispielsweise Kondenswasser im Inneren der Dämmschicht auftreten kann. Aufgabe der vorliegenden Erfindung ist es somit, die thermisch isolierenden Eigenschaften eines Befestigungsankers für ein Halteelement weiter zu verbessern, insbesondere das Vorhandensein von Wärmebrücken weiter zu vermindern.

Diese Aufgabe wird ausgehend vom Oberbegriff des Patentanspruchs 1 durch den kennzeichnenden Teil des Patentanspruchs 1 gelöst. Vorteilhafte Weiterbildungen sowie zweckmäßige Ausgestaltungen sind in den abhängigen Ansprüchen angegeben.

Die Erfindung betrifft im Einzelnen einen Befestigungsanker für ein Halteelement, für Fensterläden, welcher zur Befestigung in einer Wandung mit Dämmschicht und Mauerwerk, vorzugsweise in einer Wandung mit außen liegender Dämmschicht vorgesehen ist. Der Befestigungsanker umfasst dabei eine Ankerstange mit einem Gewinde zur Aufnahme eines Halteelements. Dabei ist die Ankerstange vollständig aus Kunststoff gebildet wobei die Ankerstange sowohl die Dämmschicht als auch das Mauerwerk zumindest teilweise durchdringt.Erfindungsgemäß ist der Befestigungsanker dadurch gekennzeichnet, dass in dem Hohlraum (6) eine metallische Füllung (7) vorgesehen ist und die Füllung (7) im mittleren Bereich des Hohlraums (6) entlang der Länge der Ankerstange (5) positioniert ist. Exemplarisch ist vorliegend von einem Befestigungsanker für ein Halteelement für Fensterläden auszugehen. Der Befestigungsanker bietet über seinen Gewindeanschluss jedoch auch Möglichkeiten, andere Arten von Haltemitteln aufzunehmen. Der erfindungsgemäße Kunststoffanker eignet sich einerseits zum Einbau in eine Wandung mit außen liegender Dämmschicht, er ist aber auch für Wandungen mit beispielsweise einem Isolierputz oder für hoch dämmende Ziegel geeignet und einsetzbar, da durch die Verwendung der vollständig aus Kunststoff hergestellten Ankerstange nahezu keine Wärmebrücke in das Innere der Wandung entsteht.

Beim erfindungsgemäßen Befestigungsanker ist vorgesehen, dass die Ankerstange auf mindestens einem Teil ihrer Länge einen Hohlraum aufweist, insbesondere rohrförmig ausgebildet ist. Die üblicherweise als länglicher Stab ausgebildete Ankerstange weist in dieser Ausführungsform einen zentrischen Hohlraum, beispielsweise eine Bohrung oder dergleichen auf, wodurch die Biegesteifigkeit verbessert wird. Insbesondere bei einer Herstellung im Extrusionsverfahren ist auf diese Weise auch eine Materialeinsparung und/oder Gewichtseinsparung ermöglicht. Erfindungsgemäß ist vorgesehen, dass im mittleren Bereich des Hohlraums entlang der Länge der Ankerstange eine metallische Füllung positioniert ist, um an dem Übergang zwischen Mauerwerk und Dämmschicht eine ausreichende Knickstabilität zu gewährleisten.

Zur Bereitstellung der notwendigen Stabilität ist vorzugsweise die Verwendung von Polyamiden, beispielsweise PA6 als Kunststoff vorgesehen. Es ist jedoch auch jede andere Art von Kunststoff möglich, soweit die mechanischen Stabilitätseigenschaften, insbesondere hinsichtlich der Biegesteifigkeit den für den zu befestigenden Gegenstand benötigten Anforderungen genügen.

Eine zweckmäßige Weiterbildung ist dadurch gekennzeichnet, dass der Kunststoff als faserverstärkter Kunststoff, insbesondere als Glasfaser verstärkter Kunststoff ausgebildet ist. Ein Vorteilhafter Faseranteil ist hierbei zwischen 20% und 50%, insbesondere bei 30% realisiert.

Die metallische Füllung ist durch eine Gewindestange gebildet welche derart eingedreht ist, dass sie den Hohlraum teilweise ausfüllt. Bei entsprechender Abstimmung des Durchmessers des Hohlraums ist es möglich, eine Gewindestange in ein dafür vorgesehenes Gewinde oder selbstschneidend in den Hohlraum einzudrehen. Die Gewindestange, welche den Hohlraum teilweise ausfüllt, gewährleistet an dem Übergang zwischen Mauerwerk und Dämmschicht eine ausreichende Knickstabilität. Dies ist bei der Verwendung des Befestigungsankers für schwerere Befestigungsgegenstände, beispielsweise für Fensterläden zu bevorzugen.

In einer weiteren zweckmäßigen Ausgestaltung ist vorgesehen, dass die Oberfläche der Ankerstange mindestens eine rillenförmige Vertiefung aufweist. Die erfindungsgemäße Ankerstange wird üblicherweise in Bohrungen, welche durch die Dämmschicht in das Mauerwerk eingebracht werden, eingeschoben und darin verklebt. Rillenförmige Vertiefungen in der Oberfläche der Ankerstange führen dabei zum formschlüssigen Eingriff des aushärtenden Klebers, sodass eine Bewegung der Ankerstange nachhaltig erschwert wird. Die rillenförmige Vertiefung kann dabei bereits bei der Herstellung der Ankerstange eingebracht oder später mittels eines Fräsers definiert eingefräst werden.

In einer weiteren zweckmäßigen Ausgestaltung ist vorgesehen, dass die Vertiefung entlang einer Längsachse der Ankerstange verläuft und vorzugsweise entlang der gesamten Länge der Ankerstange ausgebildet ist. Eine Vertiefung in Form einer Längsrille auf der Oberfläche der Ankerstange hindert die Ankerstange im verklebten Zustand nachhaltig an Rotationsbewegungen, welche beispielsweise durch auftretende Torsionsmomente am aufgenommenen Halteelement generiert würden. Ein Lösen der Ankerstange durch ein Abscheren der Klebschicht wird dabei vermieden. Die Anbringung der Vertiefung auf der gesamten Länge hat den Vorteil, dass die Vertiefung gleich bei der Herstellung, beispielsweise im Extrusionsverfahren eingebracht werden kann.

In einer weiteren zweckmäßigen Ausgestaltung ist überdies vorgesehen, dass eine Vertiefung entlang des Umfangs der Ankerstange verläuft und vorzugsweise entlang ihres Verlaufs Unterbrechungen aufweist. Eine Vertiefung entlang des Umfangs der Ankerstange, beispielsweise in Form von Profilrillen hindert die Ankerstange im verklebten Zustand daran, aus der Bohrung in der Wandung herausgezogen zu werden. Hierbei wird der formschlüssige Eingriff des Klebstoffs in die am Umfang verlaufende Vertiefung der Ankerstange beansprucht. Um ein Verdrehen um die Längsachse der Ankerstange zusätzlich zu verhindern, ist es vorteilhaft, die umlaufende Vertiefung zu unterbrechen, damit auch entlang dieser Bewegung formschlüssige Eingriffe des Klebstoffs in die Vertiefung erfolgen.

Eine Verdrehsicherung kann auch über eine Mehrkantform des Befestigungsankers realisiert werden.

Die Erfindung wird am nachfolgend beschriebenen Ausführungsbeispiel näher erläutert.

Es zeigen
- Figur 1: eine schematische Darstellung eines erfindungsgemäßen Befestigungsankers in einer Wandung mit Mauerwerk und außen liegender Dämmschicht,
- Figur 2: eine perspektivische Darstellung einer erfindungsgemäßen Ankerstange aus Vollkunststoff.

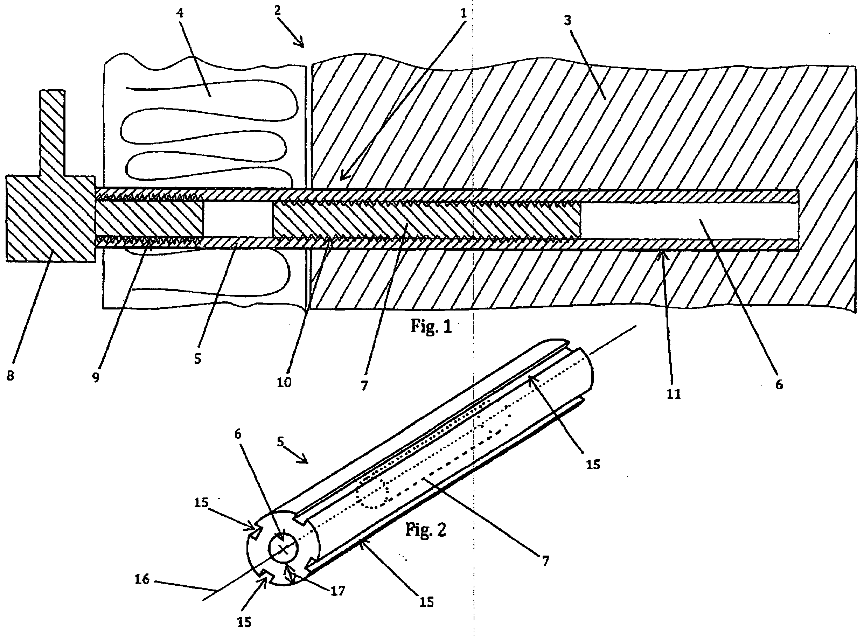

Im Einzelnen zeigt Figur 1 einen Befestigungsanker 1 welcher in einer Wandung 2 angeordnet ist. Die Wandung 2 besteht dabei aus einem Mauerwerk 3 sowie einer außen liegenden Dämmschicht 4. Der Befestigungsanker 1 ist in einer Bohrung in der Wandung 2 eingesetzt.

In der vorliegenden Ausführungsform ist der Befestigungsanker durch eine Ankerstange 5 gebildet, welche vollständig aus Kunststoff hergestellt ist. Die Ankerstange 5 weist dabei einen zentrisch innen liegenden Hohlraum 6 auf, in welchem eine Gewindestange 7 eingebracht ist. Die Gewindestange 7 füllt dabei den Hohlraum 6 nicht vollständig aus, sondern dient zur Stabilisierung der Ankerstange 5 gegen Biegemomente. Am außerhalb der Dämmschicht 4 außen liegenden Ende der Ankerstange 5 ist ein Haltemitteln in Form eines Klobens 8 für einen Klapp- Fensterladen in ein Gewinde 9 eingeschraubt. Das Gewinde 9 sowie das Gewinde 10 können entweder in die Ankerstange 5 eingeschnitten sein, oder selbstschneidend beim Einbringen des jeweiligen Bestandteils Kloben 8 oder Gewindestange 7 selbstschneidend in den Kunststoff eingebracht werden.

An der Kontaktfläche 11 zwischen Mauer 3 und Ankerstange 5 wird üblicherweise ein Klebstoff eingebracht, welcher den Befestigungsanker im montierten Zustand nachhaltig hält und gegen ein Herausziehen und/oder Verdrehen sichert.

Bei einer Länge einer Ankerstange 5 von 20cm bis 30cm weist die Gewindestange 7 eine Länge von ca. 5cm bis 20cm auf. Das Vorhandensein der Gewindestange 7 und/oder deren Länge hängen stets von der aufzunehmenden Last am Halteelement, vorliegend am Kloben 8 ab, wobei auch die Dicke der Dämmschicht 4 als Hebelarm bestimmende Größe zu beachten ist.

Figur 2 zeigt eine perspektivische Darstellung einer Ankerstange 5. Im Inneren der Ankerstange 5 ist die Gewindestange 7 gestrichelt angedeutet. Die Ankerstange 5 kann bei noch nicht vorhandener Gewindestange 7 als Meterware hergestellt werden, und entsprechend den Anforderungen der Dimensionierung der Dämmschicht 4 und der Mauer 3 flexibel zugeschnitten werden. Die Gewindestange 7 wird im Bedarfsfall in die zugeschnittene Ankerstange 5 eingedreht und weist in der Regel eine Stärke von 6 bis 10 mm auf.

Die Ankerstange 5 weist an ihrer Außenfläche Nuten 15 auf, welche vorliegend jeweils als Längsnut entlang der gesamten Längsrichtung der Ankerstange 5 ausgebildet sind. Dies ist ebenfalls zweckmäßig wenn die Ankerstange beispielsweise als Meterware hergestellt wird.

Die Längsnut 15 wird im montierten Zustand mit Klebstoff gefüllt und hindert die Ankerstange 5 an einem Verdrehen um ihre Längsachse 16. Die Nuttiefe beträgt üblicherweise 1 mm bis 2 mm, kann aber je nach Anwendungsfall auch tiefer ausgebildet werden. In einer Ausführungsform der erfindungsgemäßen Ankerstange beträgt deren Wandstärke 17 zwischen 4 mm und 10 mm, wenn die Ankerstange mit einem Hohlraum 6 ausgebildet ist. Die angegebenen Dimensionierungen beziehen sich auf eine zweckmäßige Ausführungsform, sind jedoch nach dem jeweiligen Anwendungsfall flexibel anpassbar.

### Bezugszeichenliste:

- 1: Befestigungsanker
- 2: Wandung
- 3: Mauer
- 4: Dämmschicht
- 5: Ankerstange
- 6: Hohlraum
- 7: Gewindestange
- 8: Kloben
- 9: Gewinde
- 10: Gewinde
- 11: Kontaktfläche
- 15: Nut
- 16: Längsachse
- 17: Wandstärke

## Patentansprüche

1. Befestigungsanker (1) für ein Halteelement für Fensterläden, nämlich für einen Kloben (8), welcher zur Befestigung in einer Wandung (2) mit Dämmschicht (4) und Mauerwerk (3), vorzugsweise in einer Wandung mit außen liegender Dämmschicht vorgesehen ist, wobei der Befestigungsanker (1) eine Ankerstange (5) mit einem Gewinde (9) zur Aufnahme des Halteelements (8) umfasst und die Ankerstange (5) auf mindestens einem Teil ihrer Länge einen Hohlraum (6) aufweist, wobei die Ankerstange (5) vollständig aus Kunststoff gebildet ist und die Ankerstange (5) sowohl die Dämmschicht (4) als auch das Mauerwerk (3) zumindest teilweise durchdringt **dadurch gekennzeichnet, dass** in dem Hohlraum (6) eine metallische Füllung (7), nämlich eine Gewindestange zur Bereitstellung einer ausreichenden Knickstabilität an dem Übergang zwischen Wandung (2) und Dämmschicht (4) bei der Verwendung des Befestigungsankers für schwerere Befestigungsgegenstände, beispielsweise für Fensterläden, vorgesehen ist und die Füllung (7) im mittleren Bereich des Hohlraums (6) entlang der Länge der Ankerstange (5) positioniert ist.

2. Befestigungsanker nach Anspruch 1, **dadurch gekennzeichnet, dass** die Ankerstange (5) rohrförmig ausgebildet ist.

3. Befestigungsanker nach Anspruch 2, **dadurch gekennzeichnet, dass** die Gewindestange (7) derart eingedreht ist, dass Sie den Hohlraum (6) im mittleren Bereich des Hohlraums (6) ausfüllt.

4. Befestigungselement nach einem der vorangegangenen Ansprüche, **dadurch gekennzeichnet, dass** die Oberfläche der Ankerstange (5) mindestens eine rillenförmige Vertiefung (15) aufweist.

5. Befestigungselement nach Anspruch 4, **dadurch gekennzeichnet, dass** die Vertiefung (15) entlang einer Längsachse (16) der Ankerstange (5) verläuft und vorzugsweise entlang der gesamten Länge der Ankerstange (5) ausgebildet ist.

6. Befestigungselement nach Anspruch 4 oder 5, **dadurch gekennzeichnet, dass** eine Vertiefung entlang des Umfangs der Ankerstange verläuft und vorzugsweise entlang des gesamten Verlaufs Unterbrechungen aufweist.

7. Befestigungselement nach einem der vorangegangenen Ansprüche, **dadurch gekennzeichnet, dass** der Kunststoff als faserverstärkter Kunststoff, insbesondere als Glasfaserverstärkter Kunststoff ausgebildet ist.

## Claims

1. Fastening anchor (1) for a holding element for window shutters, namely for a bracket (8), which is to be mounted in a wall (2) with insulation (4) and masonry (3), preferably provided in a wall with an exterior insulation layer, wherein the fastening anchor (1) comprises an anchor rod (5) with a thread (9) for receiving the holding element (8), and the anchor rod (5) has a cavity (6) on at least a part of its length, wherein the anchor rod (5) is formed entirely of plastic and wherein the anchor rod (5) at least partially penetrates both the insulation layer (4) as well as the masonry (3), **characterized in that** a metallic filling (7) is provided in the cavity (6), namely a threaded rod for providing sufficient buckling stability at the transition between the mansory (3) and the insulation (4) when using the fastening anchor (1) for heavy fastening objects, for example for window shutters, and the filling (7) is positioned in the central region of the cavity (6) along the length of the anchor rod (5).

2. Fastening anchor according to claim 1, **characterized in that** the anchor rod (5) is tubular.

3. Fastening anchor according to claim 2, **characterized in that** the threaded rod (7)is screwed in in such a way that it fills up the cavity (6) in the central region of the cavity (6) .

4. Fastening element according to one of the preceding claims, **characterized in that** the surface of the anchor rod (5) has at least one groove-shaped recess (15).

5. Fastening element according to claim 4, **characterized in that** the recess (15) extends along a longitudinal axis (16) of the anchor rod (5) and is preferably formed along the entire length of the anchor rod (5).

6. Fastening element according to claim 4 or 5, **characterized in that** a recess extends along the circumference of the anchor rod, and preferably comprises interruptions along its entire course.

7. Fastening element according to one of the preceding claims, **characterized in that** the plastic is designed as a fiber reinforced plastic, in particular a glass fiber reinforced plastic.

## Revendications

1. Ancrage de fixation (1) pour un élément de maintien pour des volets de fenêtres, à savoir pour un gond (8), lequel est prévu pour la fixation dans une paroi (2) avec une couche d'isolation (4) et une maçonnerie (3), de préférence dans une paroi avec une couche d'isolation se trouvant à l'extérieur, l'ancrage de fixation (1) comprenant une tige d'ancrage (5) avec un filetage (9) pour le logement de l'élément de maintien (8) et la tige d'ancrage (5) présentant, sur au moins une partie de sa longueur, un espace creux (6), la tige d'ancrage (5) étant entièrement constituée de matière plastique et la tige d'ancrage (5) traversant au moins partiellement aussi bien la couche d'isolation (4) que la maçonnerie (3), **caractérisé en ce que**, dans l'espace creux (6), un remplissage (7) métallique, à savoir une tige filetée servant à produire une stabilité au flambage suffisante à la transition entre la paroi (2) et la couche d'isolation (4) lors de l'utilisation de l'ancrage de fixation pour des objets de fixation lourds, par exemple pour des volets de fenêtres, est prévu et le remplissage (7) est positionné dans la zone centrale de l'espace creux (6) le long de la longueur de la tige d'ancrage (5) .

2. Ancrage de fixation selon la revendication 1, **caractérisé en ce que** la tige d'ancrage (5) est réalisée sous forme tubulaire.

3. Ancrage de fixation selon la revendication 2, **caractérisé en ce que** la tige filetée (7) est vissée de façon à ce qu'elle remplisse l'espace creux (6) dans la zone centrale de l'espace creux (6).

4. Élément de fixation selon l'une des revendications précédentes, **caractérisé en ce que** la surface de la tige d'ancrage (5) présente au moins une cavité (15) en forme de rainure.

5. Élément de fixation selon la revendication 4, **caractérisé en ce que** la cavité (15) s'étend le long d'un axe longitudinal (16) de la tige d'ancrage (5) et est réalisée de préférence le long de toute la longueur de la tige d'ancrage (5).

6. Élément de fixation selon la revendication 4 ou 5, **caractérisé en ce qu'**une cavité s'étend le long de la circonférence de la tige d'ancrage et présente de préférence des interruptions le long de toute l'extension.

7. Élément de fixation selon l'une des revendications précédentes, **caractérisé en ce que** la matière plastique est réalisée comme une matière plastique renforcée par des fibres, en particulier comme une matière plastique renforcée par des fibres de verre.
